(19) Europäisches Patentamt

European Patent Office

Office européen des brevets

(11) **EP 0 825 621 A1**

(12) **EUROPÄISCHE PATENTANMELDUNG**

(43) Veröffentlichungstag:
**25.02.1998 Patentblatt 1998/09**

(51) Int. Cl.$^6$: **H01F 1/147**, H02K 1/02

(21) Anmeldenummer: 97113878.9

(22) Anmeldetag: **08.08.1997**

(84) Benannte Vertragsstaaten:
**AT BE CH DE DK ES FI FR GB GR IE IT LI LU MC NL PT SE**

(30) Priorität: **22.08.1996 DE 19633982**

(71) Anmelder: **Vacuumschmelze GmbH**
**63450 Hanau (DE)**

(72) Erfinder: **Tenbrink, Johannes**
**63776 Mömbris (DE)**

(74) Vertreter:
**Fuchs, Franz-Josef, Dr.-Ing.**
**Postfach 22 13 17**
**80503 München (DE)**

(54) **Verwendung einer weichmagnetischen Nickel-Eisen-Legierung für Spulenkerne und Statoren von Schrittmotoren**

(57)     Zum Einsatz für Statoren von Schrittmotoren, insbesondere von Schrittmotoren für Quarzuhren, wird eine Legierung angegeben, die neben hoher Sättigungsinduktion von über 1,0 T gleichzeitig eine hohe Vickershärte über 150 HV besitzt und im wesentlichen 40 bis 55 % Nickel, 0,5 bis 6 % Titan und 0 bis 5 % Niob enthält, wobei der Anteil von Niob und Titan größer als 1 % ist. Die Legierung zeichnet sich durch eine sehr gute Korrosionsbeständigkeit aus.

EP 0 825 621 A1

**Beschreibung**

Die Erfindung betrifft die Verwendung einer weichmagnetischen, durch Wärmebehandlung aushärtbaren Ni-Fe Legierung für Spulenkerne und Statoren von Schrittmotoren, insbesondere von Schrittmotoren für Quarzuhren, mit Zusätzen aus einem oder mehrerer der Elemente Titan und Niob, die übliche Desoxidationszusätze und normale Schmelzverunreinigungen enthalten kann.

Für Schrittmotoren, insbesondere Schrittmotoren von Quarzuhren, werden derzeit NiFe-Legierungen eingesetzt. Für den Spulenkern ist dies üblicherweise eine Legierung mit 47 bis 48 % Ni, Rest Fe und üblicher Desoxidationszusätze und Verunreinigungen, welche im NiFe-System die höchste Sättigungsinduktion aufweist. Für den Starter ist dies je nach Konzept des Schrittmotors entweder eine NiFe-Legierung mit 75 bis 82 % Ni mit Zusätzen von Mo (oder von Mo und Cu), jeweils mit üblichen Desoxidationszusätzen und Verunreinigungen. Diese hoch-Ni-haltigen Legierungen weisen eine Sättigungsinduktion unter 0,85 T auf. Bei einem anderen Schrittmotorkonzept wird dagegen auch für den Stator die dort erwähnte Legierung mit 47 bis 48 % Ni verwendet. aufgrund des niedrigen Ni-Gehalts weist diese Legierung jedoch eine nicht ausreichende Korrosionsbeständigkeit gegen Feuchtklima auf.

Aus dem Buch „Weichmagnetische Werkstoffe", 3. Aufl. 1977, S. 124, 126, 200 bis 205 sowie S. 228 ist es bekannt, hochnickelhaltige Legierungen mit Ti, Nb-Zusatz, wie beispielsweise RECOVAC 100, (S. 288) dort einzusetzen, wo ein Werkstoff mit großer Verschleißfestigkeit und Härte sowie hoher Permeabilität benötigt wird. Diese zeichnen sich durch eine besonders hohe Permeabilität aus, so daß sie für solche Einsatzmöglichkeiten gut geeignet sind.

Bei hochnickelhaltigen Legierungen zur Anwendung für Magnetköpfe ist es zur Erzielung einer hohen Permeabilität bei gleichzeitig hoher Härte zur Verminderung des Verschleißes des Magnetkopfes aus DE 22 12 062 bekannt, der Legierung u.a. Titan und Niob zuzusetzen. Bei langsamer Abkühlung der geschmolzenen Legierung im Ofen oder einer zusätzlichen Anlaßbehandlung erreicht man damit eine Aushärtung des Materials durch Ausscheidung von Nickel-Verbindungen mit Titan oder Niob, so daß sich bei hoher Permeabilität auch eine hohe Härte des Materials ergibt. Diese hohe Härte ist bei Anwendungen, bei denen es auf Verschlußfestigkeit ankommt, wie z. B. bei Relaisteilen, vorteilhaft. Bei austenitischen Eisen-Nickel-Legierungen nach DE 30 12 673 ist es ebenfalls bekannt, u.a. Titan oder Niob zuzusetzen, um so eine Härtung durch Wärmebehandlung zu erreichen. Hier werden niedrige Nickelgehalte zwischen 33 und 45 % mit höheren Anteilen der Zusätze zur Aushärtung im Bereich von 4 bis 10 % so kombiniert, daß nach der Aushärtung der Nickelanteil unter 30 % liegt. Hierdurch erreicht man, daß das Gefüge der fertigen Legierung unmagnetisch ist.

Aufgabe der vorliegenden Erfindung ist es, einen Legierungsbereich innerhalb des Legierungssystems mit den Hauptelementen Nickel und Eisen anzugeben, der eine weitere entscheidende Verbesserung der für Spulenkerne und Statoren von Schrittmotoren, insbesondere von Schrittmotoren für Quarzuhren eingesetzten Legierungen im Hinblick auf diesen Verwendungszweck bringt. Die Kombination bestimmter Bereiche im Nickelgehalt zusammen mit entsprechenden Bereichen bei den Zusatzstoffen zur Aushärtung von Niob und Titan, läßt sich erfindungsgemäß gleichzeitig eine hohe Sättigungsinduktion bei gleichzeitig hoher Vickershärte und hoher Korrosionsbeständigkeit sowie einer Permeabilität im Bereich größer als 25 000 $\mu_{max}$ ein genügend weichmagnetischer Werkstoff mit einer Koerzitivfeldstärke unter 0,15 A/cm angeben. Hierdurch können hochwertige Spulenkerne und Statoren für Schrittmotoren mit verbesserter Korrosionsbeständigkeit angegeben werden. Die größere Härte ist zudem bei der Verarbeitung der Teile (Transport, Montage) vorteilhaft, da die Teile unempfindlich sind.

Die Lösung besteht erfindungsgemäß darin, daß zur Erzielung einer Sättigungsinduktion über 1.0 Tesla bei gleichzeitig hoher Vickershärte über 150 HV und verbesserter Korrosionsbeständigkeit eine Legierung mit in Gew.%: 40 - 55 % Ni, 0,5 - 6 % Ti und 0 - 5 % Nb mit der Maßgabe verwendet wird, daß der Anteil von Ti + Nb zusammen größer als 1 % ist.

Bei Verwendung von Legierungen mit Ti, Nb-Zusatz bildet sich nach Glühung unter $H_2$ oder $NH_3$ eine schützende Oxidschicht, welche ohne weitere Maßnahmen Korrosionsbeständigkeit gegen feucht/trockenes Wechselklima bieten. Ein weiterer Vorteil derartiger Legierungen ist ihre Aushärtbarkeit.

Nach einer Hochglühung, welche zur Einstellung der weichmagnetischen Eigenschaften im Temperaturbereich zwischen 900 und 1200°C unter $H_2$ oder $NH_3$ stattfindet, sind die bisher verwendeten Legierungen extrem weich (HV 100 - 130). Bei Verwendungen von Legierungen hingegen mit Ti, Nb-Zusatz kann jedoch durch eine nachgeschaltete Glühbehandlung im Temperaturbereich zwischen 550 und 800°C, vorzugsweise 650 ± 30°C eine Aushärtung durch Bildung $Ni_3(Ti, Nb)$-Phase erzielt werden, wobei eine Härte HV von über 200 erreicht wird.

Diese Legierungen sind ganz hervorragend dazu geeignet in Schrittschaltmotoren, speziell in Schrittschaltmotoren von Quarzuhren, eingesetzt zu werden, da sie eine hervorragende Korrosionsbeständigkeit bieten.

Vorteilhafte Weiterbildungen der verwendeten Legierung sind in den Unteransprüchen beschrieben.

Als Ausführungsbeispiel wurden unterschiedliche Legierungen folgendermaßen verarbeitet:

1. Heißwalzen zu Achtkantstäben mit 40 mm $\varnothing$ bei einer Heißwalztemperatur von 1180 bis 1200°C

2. Schälen der erhaltenen Stäbe zu einem runden ∅ von 35 mm

3. Wärmebehandlung 5 h bei 1000°C im Vakuumofen, anschließend Abschrecken im Wasser

4. Ziehen der Stäbe auf einen runden ∅ von erst 24 und dann 19,5 mm.

Die Meßproben wurden bei 19,5 mm in walzhartem Zustand bei einer Schlußverformung von etwa 70 % entnommen. Die Messung der magnetischen Eigenschaften, wie Koerzitivfeldstärke, Permeabilitäts- und Induktionswerte erfolgte an Massivringen, die Messung der mechanischen Eigenschaften einschließlich der Härte an Proportionalstäben aus dem gezogenen Material. Bevor die magnetischen Eigenschaften gemessen wurden, sind die Massivringe einer Glühbehandlung bei einer Temperatur von 1150°C über 4 h unterworfen und dann mit normaler Ofenabkühlung abgekühlt worden. Anschließend erfolgte eine Anlaßbehandlung zur Aushartung bei 650°C mit rascher Abkühlung in einer Kühlfalle. In der nachstehend aufgeführten Tabelle 1 sind die Zusammensetzungen der Probelegierungen entsprechend der Chargen-Nr. 81/8476 bis 84/8529 aufgeführt.

Ebenfalls in Tabelle 1 enthalten sind Legierungen, welche zu Bandmaterial verarbeitet wurden (93/4295, 73/5087 und 75/2370). Diese wurden heißgewalzt auf Dicke 5 mm und nach einer Zwischenglühung kalt auf verschiedene Enddicken von 1,0 bis 0,3 mm gewalzt.

Die Tabelle 2 zeigt für die gleichen Chargen-Nr. die gemessene Koerzitivfeldstärke Hc und die dazugehörige Vikkershärte HV nach der Hochglühung sowie nach der zusätzlichen Anlaßbehandlung abhängig vom Anteil an Titan und Niob. Man sieht, daß zur Erzielung einer Vickershärte von über 150 Titan vorhanden sein muß, bei niedrigen Titangehalten jedoch ein höherer Anteil an Niob unerläßlich ist. Für optimierte Legierungen mit 46 bis 51 % Nickel, 1,45 bis 2,0 % Titan, 0 bis 1 % Niob, 0,40 bis 0,6 % Mangan, 0,20 bis 0,45 % Si, Rest Eisen, ergaben sich folgende Meßwerte nach der Schlußglühung:

Permeabilität $\mu_{max}$ = > 25.000
Koerzitivfeldstärke Hc = < 0,1 A/cm
Sättigungsinduktion $B_S$ = 1,35 T bis 1,40 T
Remanenzverhältnis $B_R / B_S$ = 0,40
Curietemperatur Tc = 390°C bis 450°C
spez. elektr. Widerstand = 0,7 $\Omega * mm^2/mm$
Härte HV = 220 - 280
Zugfestigkeit Rm = 600 - 700 $N/mm^2$.

Im Hinblick auf die Korrosionsbeständigkeit gegen Feuchtklima ist z. B. bei Relaisteilen ein Klimatest von 48 h Dauer üblich mit insgesamt 8 Zyklen

| 3 h | 55°C | 95 % rel. Feuchte |
|-----|------|-------------------|
| und 3 h | 20°C | 45 % rel. Feuchte |

Ebenfalls üblich zur Beurteilung ist ein Test mit Lagerung von Teilen in destilliertem Wasser für 48 h (Wassertest). Zur Beurteilung werden jeweils 100 Teile dem Test ausgesetzt. Korrosionsbeständigkeit liegt vor, wenn keines der Teile bei einer anschließenden Beurteilung unter einem Stereomikroskop (Vergrößerung 16x) Restpunkte zeigt. Tabelle 1 zeigt die Ergebnisse für eine NiFe-Legierung (47,5 % Ni) und für Legierungen mit Ti-Zusatz nach Glühung bei 5 h | 1150°C | $H_2$ (das Material mit Ti-Zusatz wurde zusätzlich bei 650°C | 2h | $H_2$ ausgehärtet; dies beeinflußt die Korrosionsbeständigkeit aber nicht). Bei der derzeit üblicherweise verwendeten NiFe-Legierung treten im Klimatest typischerweise an 5 bis 20 % der Teile Restpunkte auf - das Material ist nicht korrosionsbeständig. An Legierungen mit Ti-Zusatz wurde bisher nach Klima- oder Wassertest nie das Auftreten von Restpunkten beobachtet.

| Legierung | Klimatest (Ausfall in %) | Wassertest (Ausfall in %) |
|-----------|--------------------------|---------------------------|
| 47,5 % NiFe | 5 - 20 % nicht beständig | 100 % nicht beständig |
| ca. 50 % NiFe mit Ti-Zusatz | | |
| 73/5087 | 0 % | 0 % |
| 75/2370 | 0 % | 0 % |

Mit Proben aus Recovac 50 der Charge 75/2370 wurde versucht, ob gezielt eine oberflächliche Oxidschicht erzeugt werden kann, welche elektrisch isolierend ist. Dazu wurden Plättchen 15 x 10 x 1 mm$^3$ auf verschiedene Weise gegleicht, und anschließend mittels einer Vierpunktmessung der Widerstand bestimmt. Tabelle 3 zeigt die Ergebnisse

| Probe | Gleichung | | | Widerstand (Mittelwert) |
|---|---|---|---|---|
| 1 - 6 | 5 h | 1150°C | H$_2$ | 0,08 Ω |
| 7 - 12 | 5 h | 1150°C | NH$_3$ | 0,02 Ω |
| 13 - 18 | 5 h | 1150°C | H$_2$ | > 1 M Ω |
| | + 1 h | 650°C | Luft | |

Mit einer gezielten Oxidation der Oberfläche läßt sich also eine isolierende Schicht erzeugen. Bei Verwendung für Spulenkerne ist dies von Vorteil, da auf eine zusätzliche Isolation (vor der Bewicklung mit Cu-Draht) verzichtet werden kann.

Tabelle 1

| Chargen-Nr. | Ni | Mn | Si | Ti | Nb | Fe |
|---|---|---|---|---|---|---|
| 1 kg - Schmelzen: | | | | | | |
| 81/8476 | 50,1 | 0,46 | 0,21 | 0,73 | - | 48,4 |
| 81/8478 | 49,6 | 0,37 | 0,19 | 1,82 | - | 47,8 |
| 81/8479 | 50,6 | 0,06 | 0,20 | 2,54 | - | 46,4 |
| 81/8480 | 50,2 | 0,18 | 0,20 | 3,79 | - | 45,7 |
| 81/8486 | 49,8 | 0,29 | 0,20 | - | 0,88 | 48,2 |
| 81/8484 | 49,7 | 0,32 | 0,21 | - | 1,84 | 47,5 |
| 81/8487 | 49,6 | 0,31 | 0,21 | - | 2,88 | 45,8 |
| 81/8481 | 50,3 | 0,19 | 0,22 | 0,72 | 1,77 | 46,6 |
| 81/8626 | 49,9 | 0,61 | 0,21 | 2,10 | 1,00 | 46,2 |
| 81/8630 | 50,2 | 0,63 | 0,19 | 3,15 | 2,00 | 43,8 |
| 5 kg - Schmelze | | | | | | |
| 93/4295 | 50,4 | 0,5 | 0,23 | 2,00 | - | 46,87 |
| 60 kg - Schmelzen: | | | | | | |
| 84/8530 | 49,2 | 0,50 | 0,25 | 2,80 | - | 47,0 |
| 84/8565 | 50,1 | 0,53 | 0,22 | 1,28 | 1,79 | 46,0 |
| 84/8529 | 49,5 | 0,40 | 0,20 | 2,60 | 1,80 | 45,6 |
| 1 t - Schmelze: | | | | | | |
| 73/5087 | 46,15 | 0,53 | 0,22 | 1,73 | - | Rest |
| 4 t - Schmelze: | | | | | | |
| 75/2370 | 48,10 | 0,51 | 0,25 | 1,66 | - | Rest |

Tabelle 2

| Chargen-Nr. | Ti | Nb | 4h 1150°C, OK | | 4h 1150°C, OK +4h 650°C | |
|---|---|---|---|---|---|---|
| | | | Hc (A/cm) | HV1 | Hc(A/cm) | HV1 |
| 1 kg - Schmelzen: | | | | | | |
| 81/8476 | 0,73 | - | 0,030 | 120 | 0,032 | 120 |
| 81/478 | 1,82 | - | 0,047 | 128 | 0,069 | 251 |
| 81/8479 | 2,54 | - | 0,300 | 190 | 0,530 | 289 |
| 81/8480 | 3,79 | - | 4,700 | 290 | 4,790 | 378 |
| 81/8486 | - | 0,88 | 0,032 | 118 | 0,036 | 130 |
| 81/8484 | - | 1,84 | 0,045 | 130 | 0,050 | 130 |
| 81/8487 | - | 2,88 | 0,042 | 135 | 0,047 | 140 |
| 81/8481 | 0,72 | 1,77 | 0,060 | 135 | 0,065 | 159 |
| 81/8626 | 2,10 | 1,00 | 0,230 | 350 | 0,300 | 370 |
| 81/8630 | 3,15 | 2,00 | 5,400 | 359 | 7,300 | 380 |
| 5 kg - Schmelze | | | | | | |
| 93/4295 | 2,00 | - | nicht gem. | nicht gem. | 0,080 | 233 |
| 60 kg - Schmelzen: | | | | | | |
| 84/8530 | 2,80 | - | 3,100 | 240 | 4,350 | 356 |
| 84/8565 | 1,28 | 1,79 | 0,090 | 161 | 0,086 | 270 |
| 84/8529 | 2,60 | 1,80 | 4,400 | 375 | 5,850 | 395 |
| 1 t -Schmelze | | | | | | |
| 73/5087 | 1,73 | - | nicht gem. | nicht gem. | 0,095 | 245 |
| 4 t - Schmelze | | | | | | |
| 75/2370 | 1,66 | - | nicht gem. | nicht gem. | 0,085 | 230 |

Besonders vorteilhafte Legierungen mit optimalen magnetischen Eigenschaften (höchstmögliche Permeabilität und höchstmögliche Sättigungsmagnetisierung) werden erhalten, wenn der Ti-Gehalt 1 bis 2 Gew.-% beträgt und der Legierungsgehalt an Ni so gewählt wird, daß nach der Bildung der Phase Ni3Ti der Ni-Gehalt der Matrix 47,5 Gew.-% beträgt. Bei gegebenem Ti-Gehalt läßt sich für diese Fälle der Ni-Gehalt berechnen nach:

$$\text{Ni(Gesamt)} = 47{,}5 \cdot \frac{(100 - \text{Ni(Ni}_3\text{Ti)} - \text{Ti(Ni}_3\text{Ti))}}{100} + \text{Ni(Ni}_3\text{Ti)} \pm 3\text{Gew.-\%}$$

wobei

- Ni(Ni$_3$Ti): Nickel in der Phase Ni$_3$Ti (in Gew.-%),
- Ti(Ni$_3$Ti): Titan in der Phase Ni$_3$Ti (in Gew.-%) = Ti-Gehalt der Legierung und
- Ni(Gesamt): Gesamtgehalt der Legierung an Ni, d.h. Ni in der Ni$_3$Ti-Phase plus Ni in der Matrix (in Gew.-%) bedeuten.

Wenn die dynamischen Eigenschaften in Bezug auf die Anwendung eher im Vordergrund stehen, wird eine Legierungsvariante mit niedrigerem Ni-Gehalt der Matrix von 45,5 Gew.-% bevorzugt. Diese Variante führt bei geringen Abstrichen bezüglich (statischer) Permeabilität, Sättigungsmagnetisierung und Curietemperatur zu einem höheren spezifischen Widerstand: Für den Gesamtgehalt an Ni muß in diesem Fall gelten:

$$Ni(Gesamt) = 45,5 \cdot \frac{(100 - Ni(Ni3Ti) - Ti(Ni3Ti))}{100} + Ni(Ni3Ti) \pm 1Gew.\text{-}\%$$

## Patentansprüche

1. Verwendung einer weichmagnetischen, durch Wärmebehandlung aushärtbaren Ni-Fe Legierung mit Zusätzen aus einem oder mehrerer der Elemente Ti und Nb, die übliche Desoxidationszusätze und normale Schmelzverunreinigungen enthalten kann, für Spulenkerne und Statoren von Schrittmotoren, insbesondere von Schrittmotoren für Quarzuhren,
   **dadurch gekennzeichnet,**
   daß zur Erzielung einer Sättigungsinduktion über 1.0 Tesla bei gleichzeitig hoher Vickershärte über 150 HV und guter Korrosionsbeständigkeit eine Legierung mit in Gew.-%: 40 - 55 % Ni, 0,5 - 6 % Ti und 0 - 5 % Nb mit der Maßgabe verwendet wird, daß der Anteil von Ti + Nb zusammen größer als 1 % ist.

2. Verwendung einer weichmagnetischen, durch Wärmebehandlung aushärtbaren Ni-Fe Legierung mit Zusätzen aus einem oder mehrerer der Elemente Ti und Nb, die übliche Desoxidationszusätze und normale Schmelzverunreinigungen enthalten kann, für Spulenkerne und Statoren von Schrittmotoren, insbesondere von Schrittmotoren für Quarzuhren,
   **dadurch gekennzeichnet,**
   daß zur Erzielung einer Sättigungsinduktion über 1.0 Tesla bei gleichzeitig hoher Vickershärte über 150 HV und guter Korrosionsbeständigkeit eine Legierung mit in Gew.-%: 40 - 55 % Ni, 0,5 - 6 % Ti und 0 - 5 % Nb mit der Maßgabe verwendet wird, daß der Anteil von Ti + Nb zusammen größer als 2 % ist.

3. Verwendung einer Legierung nach Anspruch 1 oder 2,
   **dadurch gekennzeichnet,** daß die Legierung als Desoxidationszusätze 0,1 bis 2 % Mn und 0,1 bis 2 % Si enthält.

4. Verwendung einer Legierung nach Anspruch 1 oder 2,
   **dadurch gekennzeichnet,**
   daß die Legierung über 45 bis 52 % Ni, 0,7 bis 3 % Ti und 0 bis 3 % Nb enthält.

5. Verwendung einer Legierung nach einem der vorhergehenden Ansprüche,
   **dadurch gekennzeichnet,**
   daß die Legierung folgender Zusammensetzung genügt: 46 bis 46,5 % Ni, 1,45 bis 1,8 % Ti, 0 bis 1 % Nb, 0,45 bis 0,5 % Mn, 0,20 bis 0,45 % Si, Rest Eisen.

6. Verwendung einer Legierung nach einem der vorhergehenden Ansprüche,
   **gekennzeichnet durch** einen Ti-Gehalt von 1,5 bis 2 Gew.-% und einen Gesamtgehalt an Ni gemäß der Formel

$$Ni(Gesamt) = 47,5 \cdot \frac{(100 - Ni(Ni_3Ti) - Ti(Ni_3Ti))}{100} + Ni(Ni_3Ti) \pm 3Gew.\text{-}\%$$

   wobei

   - Ni(Ni$_3$Ti): Nickel in der Phase Ni$_3$Ti (in Gew.-%),
   - Ti(Ni$_3$Ti): Titan in der Phase Ni$_3$Ti (in Gew.-%) = Ti-Gehalt der Legierung und
   - Ni(Gesamt): Gesamtgehalt der Legierung an Ni, d.h. Ni in der Ni$_3$Ti-Phase plus Ni in der Matrix (in Gew.-%) bedeuten.

7. Verwendung einer Legierung nach einem der vorhergehenden Ansprüche,
   **gekennzeichnet durch**
   einen Ti-Gehalt von 1,5 bis 2 Gew.-% und einen Gesamtgehalt an Ni gemäß der Formel

$$Ni(Gesamt) = 45,5 \cdot \frac{(100 - Ni(Ni_3Ti) - Ti(Ni_3Ti))}{100} + Ni(Ni_3Ti) \pm 1Gew.\text{-}\%$$

wobei

- Ni(Ni$_3$Ti): Nickel in der Phase Ni$_3$Ti (in Gew.-%),
- Ti(Ni$_3$Ti): Titan in der Phase Ni$_3$Ti (in Gew.-%) = Ti-Gehalt der Legierung und
- Ni(Gesamt): Gesamtgehalt der Legierung an Ni, d.h. Ni in der Ni$_3$Ti-Phase plus Ni in der Matrix (in Gew.-%) bedeuten.

8. Verwendung einer Legierung nach einem der vorhergehenden Ansprüche,
   **dadurch gekennzeichnet,**
   daß aus der Legierung hergestellte Teile einer Schlußglühung bei 900 bis 1200°C ausgesetzt werden, und anschließend mit einer Kühlrate < 300 k/n abgekühlt wird, um beim Abkühlen die härtende intermetallische '-Phase zu bilden.

9. Verwendung einer Legierung nach einem der vorhergehenden Ansprüche,
   **dadurch gekennzeichnet**,
   daß aus der Legierung hergestellte Teile einer Schlußglühung bei 900 bis 1200°C ausgesetzt werden, und anschließend bei 600 bis 750°C angelassen werden, um die härtende intermetallische '-Phase zu bilden.

10. Verwendung einer Legierung nach einem der Ansprüche 8 oder 9,
    **dadurch gekennzeichnet,** daß
    anschließend bei einer Temperatur oberhalb 450°C in Sauerstoff enthaltender Atmosphäre gezielt oberflächlich oxidiert wird, um eine elektrisch isolierende Deckschicht zu bilden.

11. Verwendung einer Legierung nach einem der Ansprüche 8 oder 9,
    **dadurch gekennzeichnet,** daß
    anschließend bei einer Temperatur oberhalb 550 - 750°C in Sauerstoff enthaltender Atmosphäre gezielt oberflächlich oxidiert wird, um eine elektrisch isolierende Deckschicht zu bilden.

| Europäisches Patentamt | EUROPÄISCHER RECHERCHENBERICHT | Nummer der Anmeldung |
|---|---|---|
| | | EP 97 11 3878 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| Y<br>A | EP 0 505 595 A (VACUUMSCHMELZE GMBH)<br>* Seite 3, Zeile 39 - Zeile 44; Ansprüche 1,2,4-7; Abbildung 3 *<br>--- | 1<br>3-5 | H01F1/147<br>H02K1/02 |
| Y | EP 0 640 895 A (VACUUMSCHMELZE GMBH)<br>* Ansprüche 1,3 *<br>--- | 1 | |
| A | HECK C: "MAGNETISCHE WERKSTOFFE"<br>1.Januar 1967 , A HÜTHIG VERLAG , HEIDELBERG DE XP002008943<br>* Seite 343 *<br>* Seite 344 *<br>* Seite 346 *<br>--- | 1 | |
| D,A | DE 30 12 673 A (UNIV CALIFORNIA)<br>* Ansprüche 1,3,11,14,15,17 *<br>--- | 1-4,6-9 | |
| X,P | EP 0 740 313 A (VACUUMSCHMELZE GMBH)<br>* Ansprüche 1-8 *<br>--- | 1-7,9 | |
| A | PATENT ABSTRACTS OF JAPAN<br>vol. 095, no. 009, 31.Oktober 1995<br>& JP 07 166281 A (SUMITOMO SPECIAL METALS CO LTD), 27.Juni 1995,<br>* Zusammenfassung *<br>----- | | RECHERCHIERTE SACHGEBIETE (Int.Cl.6)<br><br>H01F<br>H02K |

Der vorliegende Recherchenbericht wurde für alle Patentansprüche erstellt

| Recherchenort | Abschlußdatum der Recherche | Prüfer |
|---|---|---|
| DEN HAAG | 12.Dezember 1997 | Decanniere, L |

EPO FORM 1503 03.82 (P04C03)